(19) **Europäisches Patentamt**

**European Patent Office**

**Office européen des brevets**

(11) **EP 1 251 647 A1**

(12) **EUROPEAN PATENT APPLICATION**

(43) Date of publication:
23.10.2002 Bulletin 2002/43

(51) Int Cl.[7]: **H04B 10/18**, G02B 6/34

(21) Application number: 02251730.4

(22) Date of filing: 12.03.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: **13.03.2001 US 805692**

(71) Applicant: **Nortel Networks Limited**
**St. Laurent, Quebec H4S 2A9 (CA)**

(72) Inventors:
• **Fells, Julian**
**Epping, Essex CM16 7AX (GB)**

• **Watley, Daniel**
**Bishops Stortford, Herts CM23 3PH (GB)**
• **Baker, Vernon**
**Harlow, Essex CM18 6RX (GB)**

(74) Representative: **Tocher, Alastair James**
**Nortel Networks**
**Intellectual Property Law Group**
**London Road**
**Harlow, Essex CM17 9NA (GB)**

(54) **Optical communications system with adjustable dispersion compensation**

(57) The present specification describes strain applicators, incorporating two actuators having different actuation characteristics acting in cooperation, and their use in adjustable optical filters and adjustable dispersion devices (such as compensators) to controllably strain fibre Bragg gratings to alter their reflectance characteristics. Preferred examples of the strain applicators are hybrids of a fast response actuator with a slower device, and provide a wide overall range of adjustment with fast response tuning within that range.

The strain applicators are used to provide dither, in particular to provide both in-phase and anti-phase dither of the strains applied to FBGs in a twin-grating compensator. The in-phase dithering enables centering on an incoming signal to be performed and the out of phase dithering dithers the dispersion, enabling the compensator to track changes in dispersion rapidly, using an appropriately arranged control loop.

An improved method of extracting a dispersion error signal from optical signals is also described, based on a simplified spectral analysis of data carried by the signals.

Fig. 8

EP 1 251 647 A1

**Description**

FIELD OF THE INVENTION

This invention relates to optical transmission systems, and in particular, although not exclusively, to adjustable dispersion compensators and optical filters for such systems.

BACKGROUND TO THE INVENTION

Generally, chromatic dispersion is the phenomenon of wave velocity being dependent on wavelength in a particular transmission medium. When wave pulses (having a number of frequency components) are transmitted through a dispersive medium, chromatic dispersion results in pulse broadening.

In optical transmission systems, the term "chromatic dispersion", or simply "dispersion" is used to refer to the dependence of group delay on wavelength. Linear (first order) dispersion, D, is the measure of the rate of change of group delay, $\vartheta$, with wavelength, 8. ($D=d\vartheta/d8$). Linear dispersion is typically measured in picoseconds per nanometer (ps/nm). In the case of a transmission medium, for instance an optical fibre waveguide, whose waveguiding properties are uniform along its length, the linear dispersion exhibited by the medium is proportional to its length and so, for such a medium, it is convenient to define its linear dispersion per unit length, also known as its linear dispersion power. This is typically measured in picoseconds per nanometer per kilometre (ps/nm/km).

The value of the linear dispersion of a transmission path is generally itself a function of wavelength, and so there is a quadratic (second order) dispersion term, Q, also known as dispersion slope, which is a measure of the rate of change of linear dispersion with wavelength. ($Q = dD/d8 = d^2\vartheta/d8^2$). This is typically measured in picoseconds per nanometer squared (ps/nm$^2$). In some, but not all instances, the effects of quadratic dispersion in NDS and DC fibre (non dispersion shifted fibre, and dispersion compensating fibre) are small enough not to assume significance. There are also higher dispersion terms, whose effects generally assume even less significance.

In a digital transmission system the presence of dispersion leads to pulse broadening, and hence to a curtailment of system reach before some form of pulse regeneration becomes necessary. The problem presented by dispersion increases rapidly with increasing bit rate. This is because, on the one hand, increasing the bit rate produces increased spectral broadening of the pulses, and hence increased dispersion mediated pulse broadening; while on the other hand, increasing the bit rate also produces a reduction in the time interval between consecutive bits. In a WDM (wavelength division multiplexed) digital transmission system, it is not practical to minimise the problems of dispersion by choosing to employ a transmission medium exhibiting near-zero first order dispersive power because low first order dispersive power is associated with aggravated non-linear (e.g. four-wave mixing) distortion.

A known solution to this problem is to form a transmission path from a number of lengths of dispersive optical fibre, connected by dispersion compensation devices. Each dispersion compensation device is arranged to exhibit dispersion which compensates for the dispersion of the preceding length of fibre, such that a dispersion compensated optical signal is transmitted to the next length (or to the receiver). In this way the transmission path can exhibit near-zero aggregate linear dispersion.

The dispersion exhibited by a length of optical fibre will typically vary with time (as a result of temperature variations, for example) and hence it is known to use adjustable dispersion compensation devices (either on their own, or in conjunction with fixed amplitude dispersion compensation devices) in transmission paths such as those described above, in an attempt to maintain sufficiently low aggregate dispersion. The adjustable devices may be operated with some form of feedback control loop to provide active compensation that can respond to dynamic changes of dispersion within the system, and in suitable circumstances to step changes resulting from re-routing occasioned for instance by a partial failure of the system such as a transmission fibre break.

There is a continual motivation to increase the maximum data transmission speed in optical systems and networks. This in turn generates a need to compensate more accurately for dispersion in the system and to respond more quickly to changes in that dispersion. There is, therefore, a clear need for adjustable dispersion compensation devices having fast responses (i.e. devices whose dispersion can be rapidly adjusted by an appropriate control signal), and, furthermore, a need for increases in their speeds of response.

Dispersion compensation devices incorporating chirped Bragg reflection gratings are known. A chirped grating is one in which effective pitch varies along its length. Such devices exhibit dispersion because different wavelength components of optical signals incident to the grating are reflected by interaction with grating elements at different positions along its length. Thus, different wavelength components incident to the grating travel, in effect, different distances before reflection, and so have been delayed by different time intervals when they emerge from the device.

The grating chirp may be produced by a variety of techniques. For example, the grating may have been formed such that, in its unstrained state, the physical pitch of its elements varies along its length. Alternatively, or in addition, the refractive index modulation of the elements may vary with position. Other known techniques of producing chirp are to apply non-uniform strain to an otherwise uniform grating, or to apply strain to a tapered fibre comprising grating elements which are, in the unstrained state, equally spaced.

Linearly chirped Bragg reflection gratings exhibit linear dispersion (i.e. group delay is simply a linear function of wavelength). The use of quadratically chirped gratings for filtering and dispersion compensation purposes is also known.

A known technique is to apply variable strain to Bragg reflection gratings in order to alter their physical pitches and so adjust their spectral reflectance characteristics. This technique can be used to provide an adjustable filter. For example, adjustable uniform strain can be applied to a uniform, non-chirped grating, to shift its Bragg wavelength. This technique has also been used in adjustable dispersion devices (for use as dispersion compensators, for example).

Applying uniform longitudinal strain to a linearly chirped grating has only a small effect on the linear dispersion it exhibits. In the case of Fibre Bragg Gratings (FBGs) the strains which may be applied without breaking the fibre result in only small shifts in the gradient of the group delay/wavelength characteristic.

Applying longitudinal strain of adjustable magnitude to a quadratically chirped grating can, however, produce significant changes in the linear component of dispersion it exhibits for a particular incident wavelength, and indeed devices operating on this principle are known. The adjustable strain in such devices has been applied either by using mechanical (or electromechanical) actuators, or by using piezoelectric stacks. These techniques have associated disadvantages, as described below.

An adjustable dispersion compensator incorporating two quadratically chirped gratings is described in "Twin Fibre Grating Adjustable Dispersion Compensator For 40 Gbit/s", J.A.J. Fells et al, Post-deadline paper 2.4, ECOC 2000, Munich, September 3-7, 2000. The described device employs two opposing gratings used differently to cancel out higher order dispersion. The described device consists of a four-port circulator and two adjustable FBGs, with quadratic group delays equal in magnitude but of opposite sign. A variable linear strain is applied to each grating independently, by means of piezo-electric transducers. In the zero dispersion position, both gratings are strained to their mid-range, so that spectrally they coincide. A negative linear dispersion is obtained by simultaneously increasing the tension in one grating and reducing the length in the other. Likewise positive linear dispersion is obtained in the other direction.

In other words, the combined effect of reflections of an incoming signal by both gratings is that the device exhibits substantially linear dispersion over the range of overlap of the two reflectance spectra. Increasing the strain in one grating whilst reducing the strain in the other alters both reflectance spectra, alters the extent of their overlap, and alters the slope of the group delay vs. wavelength characteristic in this overlap range.

Using piezoelectric transducers to apply the adjustable strain does, however, have disadvantages. Firstly, a single piezoelectric crystal, although able to respond quickly to an applied voltage, can produce only a small range of movement. Thus, a very large piezo stack is required to apply sufficient strain to the gratings to give the full range of dispersion tuning. This makes the compensator large and heavy and requires large driving voltage. A further disadvantage is that should the piezo stack fail, the dispersion setting of the device will be completely lost, resulting in catastrophic loss of signal.

Further dispersion compensation devices based on the combined effects of reflections in two Bragg gratings are disclosed in European Patent Application publication number 1 081 881 published 7 March 2001 and US Patent Application No. 09/653,984, filed 1 September 2000.

US 09/385,939 discloses devices in which a first Bragg grating is mechanically coupled with an adjustable strain applicator. Examples of strain applicators described in US09/385,939 are those comprising piezoelectric stacks, those which are solenoid operated, and those employing a thermal expansion type device (when slow response can be tolerated).

US 09/653,984 discloses devices in which gratings having quadratic chirp of opposite sign are coupled to a differential mode strain adjuster, operative to adjust the magnitude of dispersion exhibited by the device by reducing the tensile strain in one grating while increasing, by a substantially equivalent amount, the tensile strain in the other. The example of differential mode strain adjusters given in US 09/653,984 are of the electromechanical type.

Thermal expansion type actuators are inherently slow, and mechanical and electromechanical actuators, although being operable to give large ranges of movement, are slow compared with devices based on piezo stacks. A typical form of electromechanical actuator may include a piezo-driven motor. However, it is not possible to tune a piezo-driven motor very fast, so an adjustable dispersion compensator incorporating such a mechanism to apply strain to a grating cannot compensate for rapidly varying changes in dispersion.

The differential device disclosed in US 09/653/984 also requires a thermally compensated arrangement. This requires the refractive index change due to the thermo optic effect to be compensated by a differential thermal expansion coefficients in the material used for mounting the device. This clearly increases the complexity of the device.

There is, therefore, a need for strain applicators, and adjustable filters and dispersion devices incorporating such strain applicators, which overcome, at least partially, one or more of the above-identified problems with the prior art.

Another area in which fast response adjustable chromatic dispersion compensators are required is for the compensation of second order Polarisation Mode Dispersion (PMD) is optical communication systems.

PMD is a fundamental characteristic of both optical fibres and optical components and is typically of greater magnitude in older fibres. It arises from the consideration that single mode fibre can actually support two weakly guided modes that are orthogonally polarised. In other words, given an ideal fibre, a pulse can be launched into either of these two polarisation modes and propagate through the fibre in that polarisation mode alone. A fibre exhibits slightly different refractive indices along different axes, a physical characteristic know as birefringence. Birefringence arises from a variety of intrinsic and extrinsic features of the fibre manufacture. These features include geometric stress caused by a noncircular core, and stress birefringence caused by unsymmetrical stress of the core. Other sources of birefringence include external manipulation of the fibre. External forces will include squeezing the fibre, bending the fibre and twisting of the fibre.

In a birefringent fibre, the propagation speed will vary with the launch polarisation state into the polarisation modes of the fibre. Consequently, when proportions of the pulse are launched into both polarisation axes they travel at different speeds and hence arrive at different times. The magnitude of the difference in arrival times between the fastest and slowest paths through the fibre is known as the differential group delay (DGD).

The receiver of a direct detection optical transmission system does not distinguish between the different polarisation modes, but simply detects the combination of the different polarisation modes. The difference in arrival times of the pulse through the two polarisation modes will degrade the quality of the received data.

It has been determined that second order PMD can be considered to provide pulse deformation which are identical in nature to those resulting from chromatic dispersion. Variations in PMD occur, typically, on timescales of 1-10ms. Further information on PMD and its compensation can be found in U.S. Patent Application Serial Number 09/671,862 filed September 27, 2000.

Thus, there is a need for a dispersion compensation which can provide sufficient adjustment range, with fast enough response to compensate for such PMD variations.

When using an adjustable dispersion compensator to compensate for dispersion of an optical path, it is desirable that an automatic control loop is used to set the required dispersion. To do this, some form of "dispersion error signal" must be obtained.

Methods by which such dispersion signals have been obtained, and their associated disadvantages, are set out below:

(1) PM to AM conversion. The data signal is succeeded by a low frequency phase modulator. The net dispersion of the fibre converts this PM or FM modulation to an AM component. The magnitude of this component determines the magnitude of the dispersion. The system works at 10Gbit/s, where large dispersion mismatches may result. However, the resulting AM modulation depth is very low (1 in $10^5$) so the measurement is not very sensitive. See Feng et al., IEEE Photonics Technology Letters, Vol. 11, No. 3, March 1999.

(2) Monitoring the clock amplitude. The magnitude of the extracted clock signal is extracted and used to determine the dispersion error. This is equivalent to just monitoring a single RF frequency (the clock frequency). However, as this is a very high frequency, the clock tone is nulled after a very small amount of dispersion (+/- 40ps/nm), so the capture range of the system is very small. Also, since the response is periodic, you could be a long way off optimum, but still read a clock signal and not realise it. This system is simply the beating of the clock tone sidebands with the carrier. (Sano et al, proc ECOC'96, Paper TuD3.5).

(3) Adding an Rf subcarrier to baseband signal. A subcarrier tone is added at the transmitter, with sidebands appearing outside the modulation spectrum. These are used to determine the dispersion. However this technique significantly increases the complexity of the receiver, causes distortion to the modulated data and takes up valuable optical bandwidth (Dimmick et al, IEEE PTL, vol 12, no. 7, 2000).

(4) Using a swept tunable laser source. An RF modulation signal is placed on a tunable laser and the phase compared to an RF local oscillator, transmitted at a different wavelength. The tunable laser is swept through a range of wavelengths within the channel bandwidth and the phase difference used to deduce the dispersion. This system suffers from the disadvantage that the data must be switched off to perform the measurement. (Penticost, S.J.; Robinson, A.N.; Blewett, I.J. et al., High Capacity Optical Communications, IEE Colloquium on, 1994).

There is therefore a need for an improved method (and corresponding apparatus) of generating a dispersion error signal suitable for use in controlling an ADC.

There is also need for an improved ADC device, able to track, dynamically, changes in dispersion (i.e. an improved adaptive device).

Summary of the Invention

In light of the above discussion, certain aspects of the present invention aim to provide: strain applicators;

adjustable filters; adjustable dispersion compensators; and tracking adjustable dispersion compensators, which overcome, at least partially, one or more of the problems associated with the prior art devices. Aspects also aim to provide corresponding improved methods.

A further aspect of the present invention is to provide an improved method and apparatus for extracting a dispersion signal indicative of the dispersion of an optical path over which a signal has been transmitted, that signal being suitable for use in controlling an adjustable dispersion compensator.

According to a first aspect of the present invention there is provided a strain applicator for applying longitudinal strain of adjustable magnitude to a length of optical fibre, the strain applicator being adapted for mechanical coupling to the length of fibre and comprising first and second actuators coupled such that the magnitude of the longitudinal strain applied to the length of fibre when mechanically coupled to the strain applicator is dependent on their combined effects, the first and second actuators being independently controllable by respective control signals to adjust the magnitude of said applied strain and being selected to provide different actuation characteristics for adjusting said magnitude.

A feature of known strain applicators utilizing a single actuator in that if adjustment of strain is required then the manner in which that adjustment is achieved is limited by the characteristics of that actuator. For example, using an electromechanical actuator the speed at which strain may be adjusted is limited by the actuator's response time (i. e. time constant).

In contrast, with the inventive strain applicator, an adjustment may be achieved by control of one or other of the two actuators, or by combined control of the two together. This provides increased flexibility in the manner in which adjustment may be achieved. Furthermore, the actuators may be selected such that a limitation associated with the characteristics of one may be offset/compensated for by the characteristics of the other. In other words, the two actuators may be selected to provide complementary actuation characteristics.

For example, the first actuator may provide strain adjustment over a wide range, but on a slow timescale, whereas the second may provide very fast response but only a small range of movement. Thus, fast adjustment over small strains can be achieved by taking advantage of the second actuator's properties, and large adjustments can still be achieved, primarily by using the first actuator.

The actuation characteristics of the first and second actuators may complement each other in one or more of the following ways:

1) one may provide faster response than the other;
2) the two actuators may provide coarse and fine adjustment respectively;
3) one actuator may provide adjustment over a wide range, the other providing narrow adjustment; and/or
4) one actuator may provide higher accuracy adjustment than the other.

The actuators may of course complement each other in further/alternative ways.

Furthermore, the inventive strain applicator is not limited to an arrangement including just two actuators. It may comprise three or more actuators, the combination being selected to take advantage of the resultant combined actuation characteristics.

In a preferred arrangement, the strain applicator applies longitudinal strain to the fibre using a combination of two actuators, the second being faster than the first. Actuators providing large ranges of movement tend to be of the slower type, and faster actuators tend to give smaller ranges of movement. Thus, by combining fast and slow devices large overall ranges of strain adjustment may be achieved, whilst providing rapid adjustment over smaller scales within that total range.

In other words, the strain applicator may provide independent course and fine tuning of the strain applied to the fibre, using actuators having different response times.

Preferably the second actuator may comprise a body of electrostrictive material having a dimension which is controlled by application of a control voltage. This may be combined with a first actuator in the form of an electromechanical or thermal expansion type device. Such an arrangement provides an improvement over strain adjusters incorporating just electromechanical or thermal expansion type devices as it enables a base level of strain to be applied with the first actuator, and then adjusted rapidly over a second, additional range using the electrostrictive body. This arrangement also provides an advantage over the previous devices incorporating stacks of piezoelectric crystals, because whilst still providing rapid adjustment, relatively small voltages are required to drive the second actuator. Typically, the electrostrictive body of the second actuator can be controlled with a voltage having a peak value of, say, 20 volts, whilst prior art devices using piezo stacks have required control voltages of the order of 100 volts or more (even up to 1000V). Furthermore, if the second actuators fails for some reason, then adjustable strain may still be applied using just the first actuator.

In certain aspects of the invention, the second actuator may comprise a piezoelectric crystal forming part of an end stop to a conventional electromechanical or thermal expansion type actuator.

It will be apparent that the first and second actuators may be arranged in a number of ways so that the total strain applied to the length of fibre is dependent on both of them, but is independently adjustable by each. In certain preferred arrangements, the first and second actuators are simply arranged in series to provide an overall range of strain adjustment corresponding to the sum of their individual ranges of movement.

According to a second aspect of the present invention there is provided a method of applying longitudinal strain of adjustable magnitude to a length of optical fibre, the method comprising the steps of: mechanically coupling the length of fibre to a combination of first and second actuators, the first and second actuators being independently controllable by respective control signals, and being selected to provide different actuation characteristics; controlling the first actuator with a first control signal to apply a first adjustable component of longitudinal strain to the length of fibre; and controlling the second actuator with a second control signal to apply an additional adjustable component of longitudinal strain to the length of fibre.

It will be apparent that this method provides advantages corresponding to those described above with reference to the first aspect of the invention. According to this method the total longitudinal strain imparted to the fibre is a result of the combined effects of the first and second actuators. Each actuator is independently controllable to adjust the total applied strain.

Preferably the different characteristics are selected to complement each other, for example in one or more of the four ways described above.

Preferably the second actuator includes an electrostrictive element, controlled by application of a control voltage. This provides rapid adjustment of the total applied strain over a range corresponding to that of the second actuator, this range being in addition to a variable base level of strain set by the first actuator.

The first actuator may be an electromechanical device controlled by an electrical signal, or alternatively may include a thermal expansion element, controlled by means of a suitably arranged heat supply.

According to a third aspect of the present invention there is a provided a method of applying longitudinal strain of adjustable magnitude to a length of optical fibre, the method comprising the steps of: applying longitudinal strain to the length of fibre using a combination of first and second actuators selected to provide different actuation characteristics; controlling the first actuator with a first control signal; and controlling the second actuator with a second control signal.

Thus, in this method the first and second actuators act in cooperation to determine the total strain applied to the fibre.

Advantageously, the apparatus and methods in accordance with the above aspects of the invention enable the strain applied to the fibre to be dithered by appropriate control of the second actuator on a fast timescale. This dither may be imposed on a base level of strain set by the first actuator. By providing both wide ranges of strain adjustment, and the facility to dither the strain additionally, these aspects of the invention find application in a large number of devices.

A further aspect of the present invention provides an adjustable optical filter utilizing a strain applicator as described above, mechanically coupled to apply adjustable longitudinal strain to a fibre Bragg grating to adjust its reflectance spectrum.

Yet another aspect provides a corresponding method of adjustably filtering an optical signal.

In a preferred arrangement, the reflectance spectrum of the grating is peaked, and the second actuator is used to dither the strain applied to the grating. By appropriate control of such an arrangement, the filter can be centred on an incoming signal.

According to a further aspect of the present invention, there is provided a device exhibiting adjustable optical dispersion, comprising a fibre Bragg grating and a strain applicator having first and second actuators acting in cooperation, as described above, to apply strain to the fibre Bragg grating to controllably alter its reflectance characteristics. The device may be an adjustable dispersion compensator, or may be intended to exhibit dispersion for other purposes, e.g. higher order PMD.

Preferably, the system may further comprise a dispersion detector arranged to generate a signal indicative of the dispersion exhibited by an optical path along which a received signal has been transmitted to the device, and a controller arranged to control the first and second actuators according to the generated dispersion signal to compensate accordingly. By appropriate choice of the second actuator, such a device can provide rapid dispersion adjustment in response to the generated dispersion signal.

According to yet another aspect of the present invention there is provided a device exhibiting linear dispersion of adjustable magnitude, the device including first and second lengths of optical fibre provided respectively with first and second chirped Bragg reflection gratings, and being arranged to define an optical transmission path that includes reflection in both gratings, wherein each of the first and second lengths of fibre is mechanically coupled to a respective strain applicator incorporating first and second actuators as described above, the strain applicators being controllable to adjust the reflectance spectra of the gratings.

Preferably, the device further includes a controller arranged to control the strain applicators such that the reflectance spectra of the two gratings overlap (the overlapping region providing the linear dispersion of the device).

Preferably the controller is further arranged to dither the strains applied to the gratings (by means of dithering the faster response second actuators) in phase with each other, to dither the position of the overlap in the optical spectrum. Thus, by dithering the strains in phase, the amount of overlap of the reflectance spectra is unchanged, but the position of the centre of this overlap range is dithered about a centre wavelength. Preferably, the gratings are arranged so that they provide peaked reflectance spectra, so that the overlap region is also peaked. This provides the advantage that the technique of dithering the strains in phase with each other can be used to centre the overlap region on an incoming signal.

Preferably, the controller is arranged to dither the strains applied to the gratings in anti-phase with each other to dither the amount of overlap of the reflectance spectra, and hence to dither the magnitude of the linear dispersion exhibited by the device, resulting from sequential reflection in both gratings.

Preferably, the controller is arranged so as to be operable to apply both in-phase and anti-phase dither to suit requirements.

Dithering the applied strains in anti-phase can be used in conjunction with a suitable control loop to track changes in the dispersion exhibited by an optical path over which the received signal has travelled.

Dithering the strains in-phase enables the device to track any changes in the centre frequency of an incoming signal.

Perhaps more importantly, ambient temperature changes will typically result in shifts of the centre frequency of the gratings, and hence a shift in the centre wavelength of the compensator device. In-phase dithering and a feedback loop enables this shift to be corrected.

According to a further aspect of the invention there is provided a device exhibiting linear dispersion of adjustable magnitude, the device including first and second lengths of optical fibre provided respectively with first and second chirped Bragg reflection gratings, and being arranged to define an optical transmission path that includes reflection in both gratings, wherein each of the first and second lengths of fibre is mechanically coupled to a respective strain applicator, the strain applicators being controllable to adjust the reflectance spectra of the gratings, the device further comprising a controller arranged to control the strain applicators such that the reflectance spectra overlap and to dither the strains applied to the gratings in phase with each other to dither the position of the overlap.

A further aspect provides a similar device, in which the controller is arranged to dither the strains applied to the gratings in anti-phase to dither the amount of overlap.

According to a further aspect of the present invention there is provided a method of generating a dispersion signal indicative of the dispersion exhibited by an optical path along which an optical signal has been transmitted, the optical signal having been generated by a method comprising the modulation of an optical carrier with an RF data signal having frequency components across an RF data spectrum such that data is carried by the optical signal in upper and lower sidebands on either side of an optical carrier frequency, the method comprising the steps of: receiving the optical signal; deriving an RF signal having a narrow bandwidth within the RF data spectrum from corresponding optical frequencies in the upper and lower sidebands of the received optical signal; detecting the power of the derived RF signal; using the detected power as, or to generate, the dispersion signal.

Thus, the dispersion signal is generated, in effect, by a technique of limited spectral analysis of an RF signal derived from the received optical signal. The derivation of the RF signal will of course involve some demodulation process, which in effect recovers the RF data signal carried by the optical signal sidebands. This demodulation function may be provided simply by detecting the received optical signal, or at least a portion of it, using a detector such as a photodiode.

The reason why the method is able to generate a dispersion signal indicative of the dispersion of the optical path is as follows. When the RF data signal is modulated with the optical carrier, a particular frequency f in the RF data spectrum will result in corresponding components in the upper and lower sidebands either side of the optical carrier frequency $f_0$, i.e. optical frequency components at $f_0+f$ and $f_0-f$. Dispersion exhibited by the optical path results in the frequency components $f_0+f$ and $f_0-f$ travelling at different velocities along the path. This produces a phase change between the two components. According to the amount of dispersion exhibited by the optical path, the two components from the upper and lower sidebands, when received after transmission along the optical path may be in-phase, out of phase, or may have some phase relationship in between these extremes. When the RF signal at frequency f is derived from the received optical signal, its power depends on the phase relationship between the corresponding optical components in the upper and lower sidebands. If the two components in the received signal are exactly out of phase, then the power of the derived RF signal will be a minimum. Conversely, if they are in-phase, then the power will be a maximum. A more detailed description of the relationship between the dispersion and power of the derived RF signal at a particular frequency can be found below, in the description of preferred embodiments.

This method of generating a dispersion signal (which is, of course suitable for use in controlling adjustable dispersion compensator) is particularly advantageous because it does not require interruption of the transmission of the data signal, or additional apparatus or method steps at the transmitter end of the system. It performs a simplified spectral analysis on an RF signal derived from frequency components corresponding to data already present, and being carried by, the optical signal.

In order to improve the accuracy of the dispersion signal, rather than simply measuring the power of a single narrow bandwidth RF signal derived from the optical signal, the method may derive a plurality of such RF signals, and then measure the respective power of each.

In a particularly preferred arrangement, the method involves the derivation of three RF signals having narrow bandwidths centred on relative frequencies f, %2f, and 2f respectively. The measured powers of these three RF signals are combined to produce the dispersion signal, using techniques described in more detail below.

Preferably, the method further includes the step of optically filtering the received optical signal, before deriving the RF signal, or the plurality of RF signals, to remove optical frequencies outside the upper and lower sidebands. This is particularly advantageous when the received optical signal is an RZ (return-to-zero) signal. In addition to modulating a data signal with an optical carrier, the production of such signals further includes the step of modulating with a clock signal, for example a sinusoidal signal at a particular clock frequency $f_c$. As a result of this combined modulation process, "clock tones" appear in the optical signal spectrum on either side of the optical carrier frequency, and the RF data spectrum will result in corresponding sidebands around the optical carrier frequency, but also further sidebands around the upper and lower clock tones. Thus, a frequency component f in the data spectrum will, after modulation/mixing with the optical carrier and clock signal, result in frequency components $f_0 \forall f_c \forall f$ in the optical signal, in addition to those at $f_0 \forall f$ as described above.

When such a signal is received and demodulated, the intensity of an RF signal at a particular frequency will be determined, in the absence of optical filtering, by not just the corresponding frequency components in the upper and lower sidebands around the optical carrier frequency, but also by the corresponding components in the sidebands to the clock tones (i.e. the components at $f_0 \forall f_c \forall f$). These contributions from the clock tone sidebands may result in the basic spectral analysis technique being unable to generate a useful dispersion signal. Thus, by using suitable optical filters in preferred arrangements, the clock tones and their sidebands may be removed prior to extraction of the RF narrowband signal, so that only the corresponding frequency components in the upper and lower sidebands to the optical carrier frequency contribute to it.

A further aspect of the present invention provides a method of compensating for dispersion exhibited by an optical path, the method including the steps of generating a dispersion signal in accordance with the method described above, and using the dispersion signal to control an adjustable dispersion device.

In a simple form, the method involves tapping off a portion of the received signal before it is supplied to the adjustable dispersion device, where the RF signal is derived from the tapped portion.

In a more sophisticated method, the received signal is first supplied to the adjustable dispersion device. When the received signal emerges from the adjustable dispersion device it is, of course, exhibiting the combined effects of the dispersion of the optical path to the device, and of the device itself. The method then involves tapping off a portion of the emerging signal, and deriving the RF signal, and hence the dispersion signal, from the tapped portion.

Preferably, the method further comprises the step of dithering the dispersion exhibited by the adjustable dispersion device. The dispersion signal may then be used in a feedback arrangement to control the adjustable dispersion device to compensate for changes in the dispersion exhibited by the optical path. Dithering allows the use of a lock-in amplifier to determine the magnitude of an error signal with high accuracy. Dithering the dispersion is useful because

1) We obtain the sign of the dispersion error.

2) Dithering effectively differentiates the error signal, so that we obtain the gradient. Thus it can be used in a PD control feedback loop.

3) Dithering means that we apply a known frequency to the error signal. Thus we can use a <u>lock-in amplifier</u> to measure the magnitude of this signal at the known reference frequency. This vastly improves the signal to noise ratio as only signals within a very narrow bandwidth are amplified. This "phase sensitive detection" involves mixing the received signal with the reference oscillator.

According to a further aspect of the present invention there is provided apparatus for generating a dispersion signal indicative of the dispersion exhibited by an optical path along which an optical signal has been transmitted, the optical signal having been generated by a method comprising the modulation of an optical carrier with an RF data signal having frequency components across an RF data spectrum, such that data is carried by the optical signal in upper and lower sidebands on either side of an optical carrier frequency, the apparatus comprising: a photodetector arranged to detect at least a portion of the received optical signal and output a corresponding electrical signal; at least one narrowband RF filter arranged to filter the electrical signal from the photodetector, the or each filter having a passband within said RF data spectrum; at least one RF detector, the or each detector being arranged to detect the filtered signal from the or a respective one of said filters and to produce a corresponding power signal indicative of the power of the detected filtered signal.

Preferably, the photodetector is a photodiode.

Preferably, the apparatus comprises three said RF filters having passbands centred on relative frequencies f, √2f, and 2f respectively.

The apparatus may also comprise an optical filter arranged to filter the received optical signal before detection by the photodiode to remove optical frequencies outside the upper and lower sidebands.

A further aspect of the invention provides an adjustable dispersion compensator incorporating the dispersion signal generating apparatus, an adjustable dispersion module, and a controller arranged to control the module according to the intensity signal or signals from the dispersion signal generating apparatus. Preferably, the compensator comprises a tap arranged before the adjustable dispersion module to tap off a portion of the optical signal received by the compensator, and wherein the photodetector is arranged to detect the tapped portion.

The compensator may also comprise a tap arranged to tap off a portion of the received optical signal emerging from the adjustable dispersion module, and wherein the photodetector is arranged to detect the tapped portion.

Preferably the controller is arranged to dither the dispersion exhibited by the adjustable dispersion module.

The compensator in accordance may also comprise a feedback loop to track changes in the dispersion of the optical path to the compensator.

A further aspect provides a device exhibiting adjustable reflectance characteristics to optical signals, the device comprising a length of optical fibre adapted to receive an optical signal, the length of fibre comprising a Bragg reflection grating arranged to provide a reflectance spectrum to said optical signals; a strain applicator mechanically coupled to the length of fibre to apply adjustable longitudinal strain to the Bragg reflection grating to adjust said reflectance spectrum; and a controller arranged to control the strain applicator to dither the applied strain.

A further aspect provides a method of providing adjustable reflectance to an optical signal, the method comprising the steps of introducing the signal to a length of optical fibre comprising a Bragg reflection grating arranged to provide a reflectance spectrum to the signal; applying longitudinal strain of adjustable magnitude to the Bragg reflection grating to adjust said reflectance spectrum; and dithering the strain applied to the Bragg reflection grating so as to dither the reflectance spectrum.

Other features and advantages of the invention will be readily apparent from the following description of preferred embodiments of the invention, from the drawings, and from the claims.

With regard to the claims, it will be appreciated that in addition to the combinations of features claimed explicitly in this application as filed, all other technically feasible combinations of described features are contemplated by the inventors, and indeed will be apparent to the skilled reader. In particular, where different aspects of the invention may be combined, preferred features of the individual aspects may be incorporated in the combination to achieve corresponding advantageous effects. The applicants reserve the right to claim further combinations of these technical features in this, and in any corresponding foreign applications.

BRIEF DESCRIPTION OF THE DRAWINGS

Figure 1 is a plan view of a strain applicator embodying the present invention;

Figure 2 is a side view of the embodiment of Figure 1;

Figure 3 is a plan view of a further strain applicator embodying the present invention;

Figure 4 is a schematic diagram of an adjustable dispersion device embodying the present invention;

Figure 5 is a schematic plot of the individual group delays as functions of wavelength for the two gratings in the device of Figure 4, along with the combined (overall) delay provided by reflection in both gratings;

Figure 6 is a schematic plot of the overlapping reflectance spectra of the two gratings in the device of Figure 4, when dithered in-phase;

Figure 7 is a schematic plot of the overlapping reflectance spectra of the two gratings of the device of Figure 4 when dithered out of phase;

Figure 8 is a schematic diagram of a fast-tracking adjustable dispersion compensator device embodying the present invention;

Figure 9 is a plot showing the variation of RF power with dispersion for the three frequency components used by the device of Figure 8 in the generation of a control signal for the adjustable dispersion device;

Figure 10 is a schematic diagram of another adjustable dispersion compensation device embodying the present invention;

Figure 11 is a plot corresponding to that shown in Figure 9, but for the case when the received signal carries pseudo random return to zero data;

Figure 12 is a representation of the optical spectrum of a return to zero optical signal;

Figure 13 shows the characteristics of an optical filter used in embodiments of the present invention, superimposed on the optical spectrum of Figure 12;

Figure 14 is a plot corresponding to that shown in Figure 11, but resulting from use of a rectangular optical filter prior to spectral analysis;

Figure 15 is a plot corresponding to that shown in Figure 14, but resulting from use of a Gaussian filter;

Figure 16 is a schematic diagram of another adjustable dispersion compensator embodying the present invention;

Figure 17 is a schematic diagram of yet another adjustable dispersion compensation device embodying the invention; and

Figure 18 is a schematic diagram of a further adjustable dispersion compensator embodying the present invention.

## DETAILED DESCRIPTION OF PREFERRED EMBODIMENTS

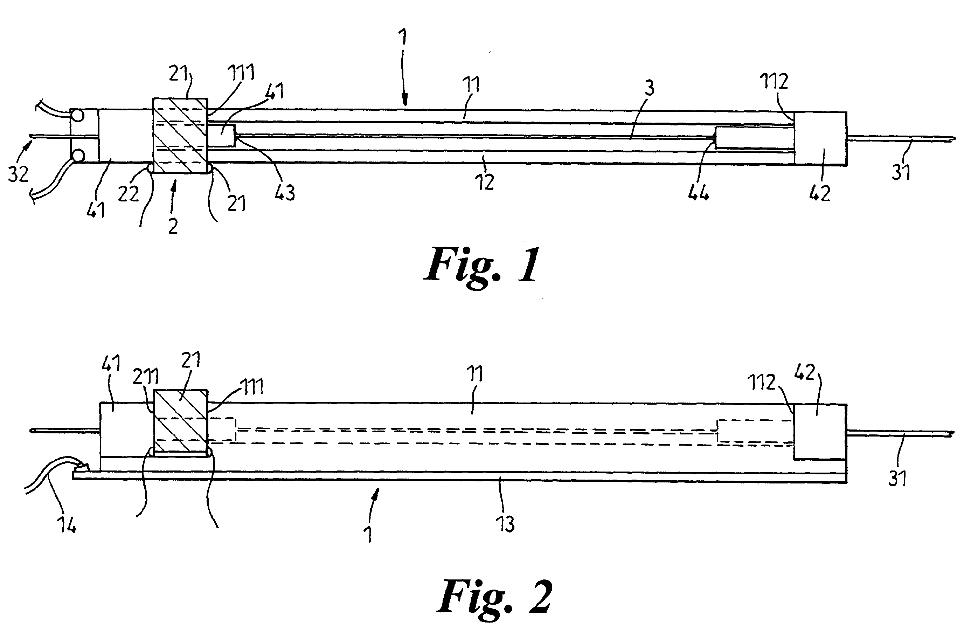

Figure 1 shows a strain applicator embodying the present invention and coupled to a length of optical fibre 3 to apply strain of adjustable magnitude to it. The length of fibre 3 includes a Bragg reflection grating, and is held between two fibre retains 41, 42. The fibre passes through the retainers and is secured to them by means of suitable solder, resin or adhesive 43, 44. A fibre tail 31 protrudes from one of the retainers 42 and it is via this fibre tail that optical signals may be introduced to the grating region for reflection. At the opposite end of the length of fibre, an anti-reflection termination 32 is provided so that, substantially, only the grating can reflect light back down the fibre tail. The length of fibre 3 is accommodated within the groove 12 of an aluminium channel 11 which forms part of a thermally controlled first actuator. The channel 12 is silicone filled.

The fibre retainer 42 abuts an end 112 of the aluminium channel 11. At the other end, a block 21 of piezoelectric material is arranged between a second end 111 of the aluminium channel and the other fibre retainer 41. Electrodes 22 and 23 are provided on surfaces of the block 21 to enable a control voltage to be applied to it. The dimension of the block 21 along the length of the fibre is dependent on the applied voltage, and hence by application of a suitable control voltage the position of the fibre retainer 41 relative to the end 111 of the aluminium channel 11 can be rapidly varied. This in turn enables rapid adjustments to be made to the strain applied to the length of fibre 3 held between the retainers.

Moving on to Figure 2, this shows a side view of the device of Fig 1. A strip heater 13 extends along the aluminium channel 11 and is in thermal contact with it. Power is supplied to the strip heater 13 by means of leads 14. By controlling power supply to the strip heater the temperature of the aluminium channel 11 can be varied, which in turn results in a variation in its length by thermal expansions and contractions. In addition, the temperature variation is communicated to the fibre and alters the refractive index via the thermo-optic effect, thus further varying the Bragg wavelength. In particular, the distance between the end surfaces 111 and 112 of the channel 11 is dependent on the temperature of the channel, and so control of the strip heater provides strain adjustment to the fibre grating on a slow timescale.

In this embodiment, the strip heater and aluminium channel form a first, slow, actuator, and the piezoelectric element 21 forms part of a faster response second actuator arranged in mechanical series with the first.

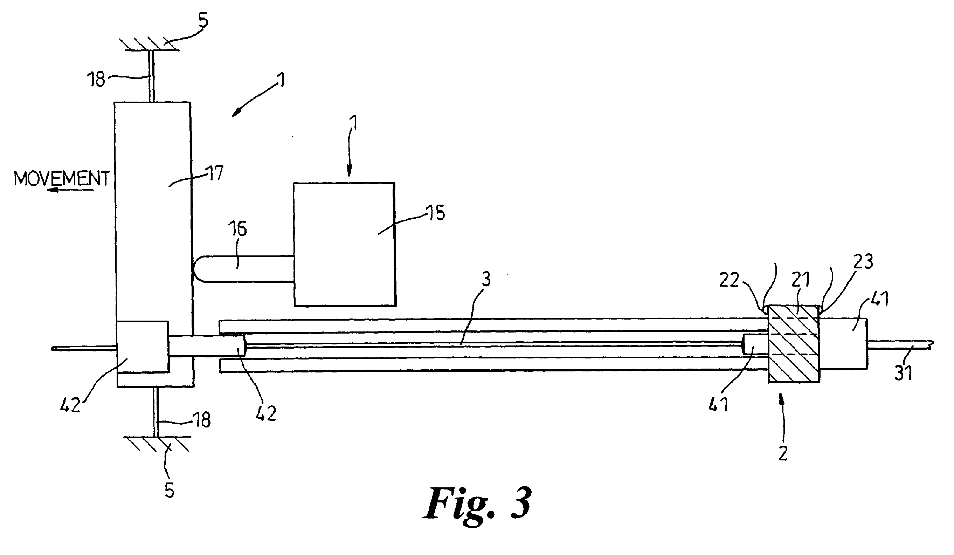

Figure 3 shows a further strain applicator embodying one aspect of the present invention. In this example, a piezoelectric element 21 is once again used as, in effect, a replacement for a fixed end stop on an otherwise electromechanical actuator. The piezoelectric block 21, through which a tail of the first fibre retainer 41 passes, is arranged to abut an end of a silicone filled metal channel. Application of a control voltage to the block by means of electrodes 22 and 23 enables the position of the fibre retainer 41 to be rapidly adjusted in a direction along the fibre length, relative the metal channel. Although not shown in the drawing, the metal channel is fixed rigidly to a framework 5 of the device such that there is negligible relative movement between the two.

A length of optical fibre 3 incorporating a Bragg grating is held between the first fibre retainer 41 and a second retainer 42 which engages with a moveable beam 17 which is connected to the rigid frame 5 by leaf springs 18. An electromechanical device incorporating a drive motor 15 and a moveable finger 16 is controlled to deflect the beam 17 (i.e. move it relative to the frame 5 in a direction substantially along the fibre's longitudinal axis). The beam 17, drive motor 15, and finger 16 provide a first electromechanical actuator which acts in conjunction with the piezoelectric actuator 2 to determine the total strain applied to the fibre grating. The electromechanical actuator 1 provides a large range of strain adjustment, but has relatively slow response to control signals. In contrast the piezoelectric actuator 2 has fast response to a control voltage, but gives only a small range of movement.

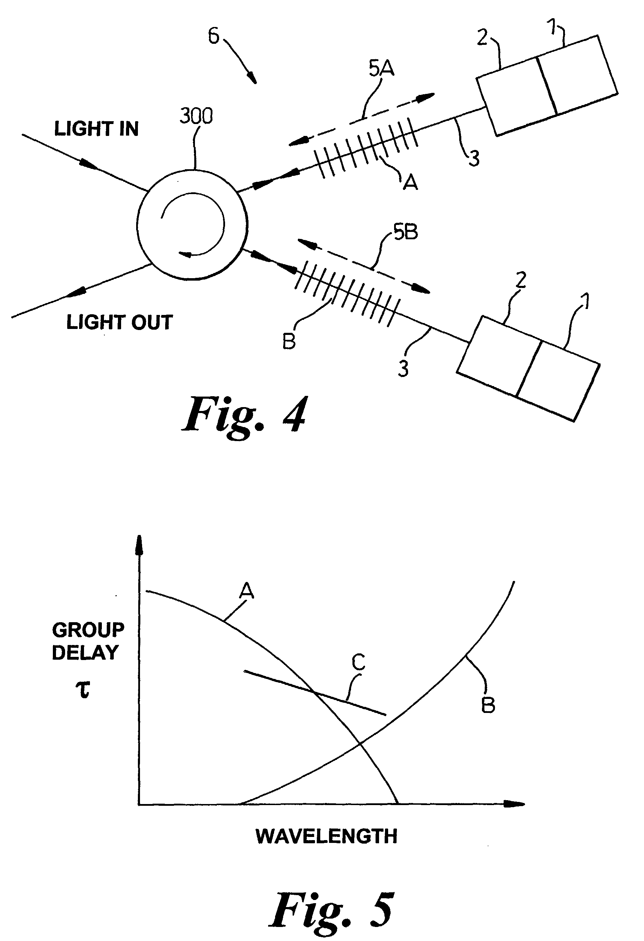

Referring now to Figure 4, this shows an adjustable dispersion device 6 embodying the invention, which incorporates two quadratically chirped fibre gratings A and B arranged to give adjustable linear dispersion. The device 6 uses two forms of linear strain actuator 1 and 2 on each grating. Firstly there is an inch-worm device 1 using differential screw threads to achieve large dispersion adjustment, but on slow timescales. Secondly there is a directly driven piezoelectric element 2 on what would otherwise be the fixed end stop of the first actuator 1. This second actuator 2 gives rapid tuning over small dispersion ranges. The actuators 1 and 2 on each grating are controlled by respective control signals from a controller (not shown in the Figure). The adjustable linear strain applied to each grating is represented by the double headed, broken line arrows $S_A$ and $S_B$. Sequential reflection of incident light by the two gratings is achieved by means of a 4-port circulator 300.

The piezo-electric elements are used to apply dither to the strain on each grating. Dither is applied to the gratings for two purposes. Firstly, if the dither tones applied to the two gratings are in-phase, then the centre wavelength of the compensator is dithered. In this embodiment the gratings are written such that the reflectivity is shaped with a higher reflectivity in the centre of the band than the edges (i.e. the reflectance spectrum of each grating is peaked). Dithering the centre wavelength in this way can then be used to position the compensator precisely on an optical signal. Secondly, if the dither tones applied to the gratings are out of phase, then the dispersion of the compensator is dithered. This allows a feedback circuit to determine the sign of the dispersion mismatch, so that adjustment of the dispersion setting can be made in the correct direction.

Figure 5 shows the group delay versus wavelength characteristic of the individual gratings, together with the characteristic resulting from their combined effects in the region of overlap of their reflectance spectra. In this overlapping region, the group delay has a function of wavelength that is presented to an incoming optical signal is linear. The amount of overlap determines the slope of this combined characteristic (labelled C in the Figure).

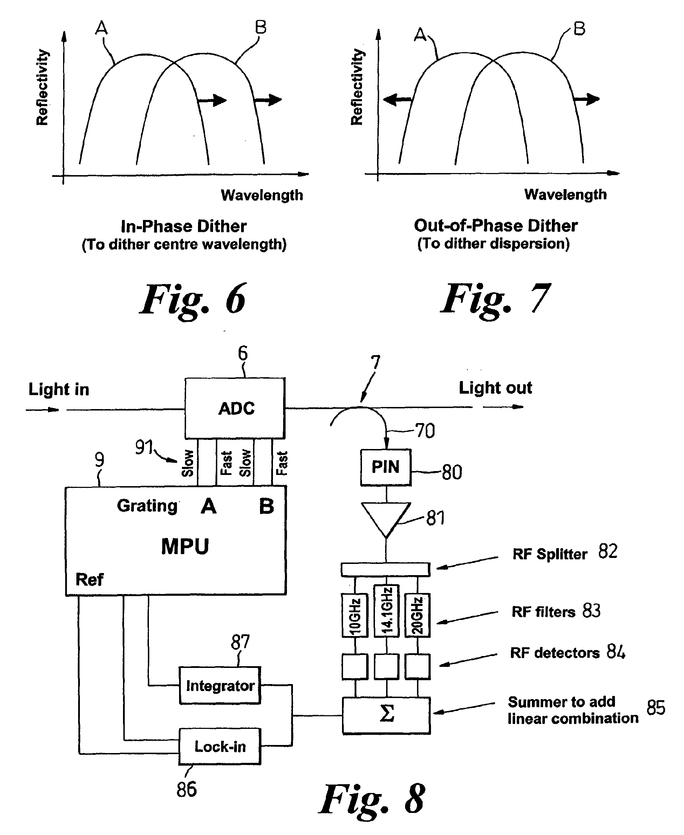

The principle of the dither tones is shown in Figures 6 and 7. Figure 6 shows dither being applied in-phase. In this case, the amount of overlap of the reflectance spectra does not alter, and so neither does the magnitude of the linear dispersion provided by the combined reflections. However, this in-phase dither does alter the position of the overlapping region on the wavelength axis. As can be seen, the overlapping portion has a central peak, resulting from the shape of the individual reflectance spectra.

Figure 7 shows the situation resulting from out of phase dither. The central wavelength of the overlapping region is unchanged, but the size of the overlapping region is varied as the two spectra are dithered anti-phase. This has the effect of dithering the magnitude of the linear dispersion provided by the combined reflectance.

In preferred embodiments, the dither tones may use the same local oscillator, swapping the phase by $180^0$ to switch between dispersion and centre wavelength dither. Alternatively, two independent local oscillators at different frequencies can be used.

One method of determining the magnitude of the dispersion mismatch is to tap off a portion of the received signal, detect it with a photodiode and observe the RF spectrum. This method is employed by the apparatus shown in Figure 8. Figure 8 shows adjustable dispersion compensation apparatus embodying the invention, and incorporates an adjustable dispersion device of the type shown in Figure 4. Introducing dispersion modifies the spectrum through beating of the upper and lower sidebands, such that notches appear in the electrical spectrum where the upper and lower sidebands are exactly out of phase. Rather than using an electrical spectrum analyser, the apparatus of Figure 8 monitors just three frequencies: f, %2f, and 2f. In this example, these RF frequencies correspond to 10, 14.1 and 20 GHz respectively. These frequency signals are then added in linear combination to generate a single control signal for processing.

Looking at the components of the apparatus of Figure 8 in more detail, a portion 70 of the light out of the adjustable dispersion device 6 is tapped off using a coupler 7. This tapped portion 70 is detected by a PIN diode 80. The detected signal (now electrical) is amplified by an amplifier 81, and fed by a splitter 82 to three narrow band RF filters 83 at frequencies 10, 14.1 and 20 GHz as described above. The respective filtered signals are detected by RF detectors 84, whose outputs are then combined by a summer 85. An output from the summer 85 is fed to lock in apparatus 86 and an integrator 87, which are appropriately connected to a processor unit (controller) 9. According to the signals received from the RF spectral analysis components, the controller 9 outputs suitable control signals 91 to control the slow and fast actuators which act in combination to apply adjustable strain to each of the gratings in the adjustable dispersion device 6.

It will be apparent that it is not possible to tune a piezo-driven motor strain mechanism very fast, so adjustable dispersion compensators of the prior art could not compensate for rapidly varying changes in dispersion. An example where rapid changes in dispersion are required is for the compensation of second order polarisation mode dispersion which occurs on timescales of 1-10ms. This typically requires small chromatic dispersion adjustments of up to 60ps/nm (dependent on mean PMD and bit rate). In a preferred 500ps/nm2 grating design, 0.2nm wavelength separation (i.e. 0.1nm per grating) corresponds to 100ps/nm dispersion tuning. Therefore we would like 0.06nm shift per grating, which is 0.00387% strain or 4.6 microns over the 120mm length of fibre. This is realisable using the direct drive piezo elements. A further problem is providing independent control signals for the two gratings. The twin-grating adjustable compensator allows independent control of both dispersion and centre wavelength. This latter feature is very useful for compensating for drift in the centre wavelengths of the gratings through temperature change. However this flexibility also results in difficulties in controlling the gratings, as an adjustment to one grating changes both dispersion and centre wavelength. This is exacerbated by the fact that we may wish the control loop to work in tandem with a (first order) PMD compensator. By using very specific dither frequencies it is possible to isolate changes occurring due to the dispersion compensator from other changes in the system (such as the PMD compensator). By using in-phase and out-of-phase tones it is also possible to isolate the centre wavelength control signal from the dispersion control signal.

The amount of movement required for the dither tones is considerably less than that for second order PMD compensation.

The device of Figure 8 offers significant advantages over previous designs in which a piezo stack was used to control a grating or gratings, because a very large piezo stack was required to apply sufficient strain to the gratings to give the full range of dispersion tuning. This made the compensator large and heavy and required large driving voltages. A further disadvantage was that should the piezo stack fail, the dispersion setting of the device was completely lost, resulting in catastrophic loss of signal.

Another solution to resolving the centre wavelength/dispersion ambiguity has been to use a differential mechanical arrangement as disclosed in US 09/653,984. At present using two independent strain actuators is the preferred arrangement because of the difficulties in manufacturing a differential device. The differential device also required a thermally compensated arrangement. This required the refractive index change due to the thermooptic effect to be compensated by a differential thermal expansion coefficients in the materials used for mounting the device.

Thus, the device of Figure 8 incorporates the following advantageous features:

(i) The addition of directly driven piezo-electric elements to the nominally fixed end-stop of the piezo-driven motor strain applicator; (ii) The use of in-phase dither tones for control of centre wavelength; (iii) The use of out-of-phase dither tones for control of dispersion.

It will be apparent that an adjustable dispersion compensator is of limited value if an engineer has to manually set up each compensator. It is far preferably if the compensator can be adaptive and intelligent, such that it sets itself up and dynamically tracks changes in the system. This reduces the deployment costs considerably and dynamic tracking also allows the system to run with reduced margins, further reducing system cost. The device of Figure 8 provides such dynamic tracking. The dither control methods employed enable the dispersion and centre wavelength of the compensator to track changes in the system. Green-field 40Gbit/s systems may not be limited by second order PMD. However it is very possible that in the future customers may require 40Gbit/s data over existing installed fibre. In this scenario, rapid chromatic dispersion adjustment would be the preferred option for compensating second order PMD and can be provided by the Figure 8 apparatus.

The device of Figure 8 represents an improvement over devices of the type described in US 09/653,984 and US 09/385,939, refined by using a dither on the dispersion compensation adjuster to centre the reflection pass band on the signal and derive as dispersion adjustment error signal. The device can track changes in dispersion, and the centre wavelength can also track independently.

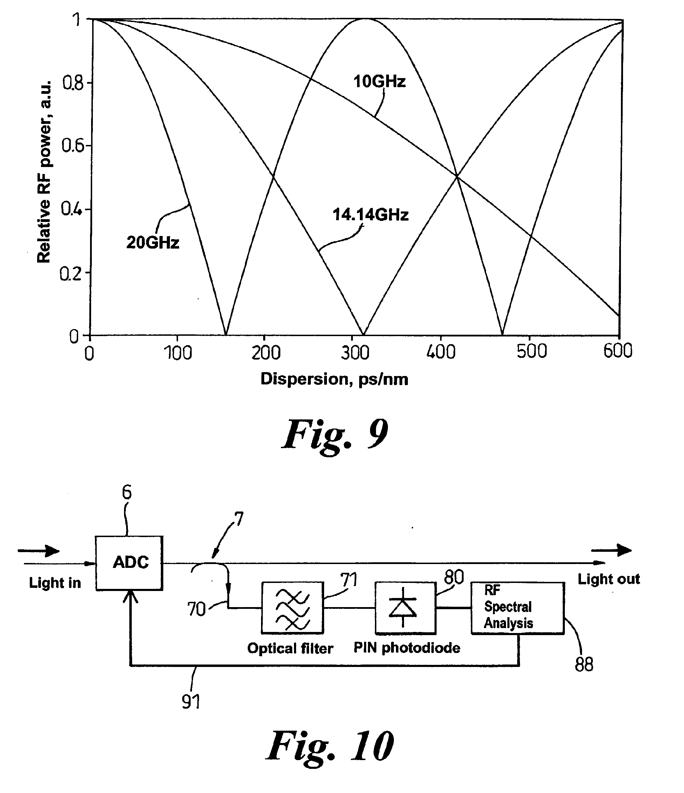

Figure 10 shows a tracking Adjustable Dispersion Compensator (ADC) embodying the present invention. The optical signal is coupled through and adjustable dispersion compensator 6 of any description (e.g. Bragg grating, Etalon, Virtually Imaged Phased Array, Arrayed Waveguide), as shown in Figure 10. The resulting signal enters a coupler 7 to tap a proportion 70 of the light out, with the remaining light going through to the optical receiver. The light tapped off is passed through an optical filter 71 to remove the strong clock tones either side of the carrier. This light is detected on a photodiode 80. The received RF signal is amplified split into several paths. Each path passes through a different narrowband RF filter. These signals are used to deduce an error signal 91 which can be used in a feedback loop to set the dispersion of the compensator 6 to the required value.

The control signal 91 is deduced from the detected modulated RF data spectrum after a photodiode (see Figure 10). Dispersion introduces a phase change across the optical spectrum. This results in sidebands (of a particular frequency) either side of the carrier going in and out of phase with each other. When these are detected on the photodiode, they beat with each other and interfere. If the sidebands of the frequency in question are in phase, there is a maximum in the RF power and if they are exactly out of phase there will be a null in the RF power. At intermediate phases, there will be an intermediate value of RF power. The rate at which the sidebands cycle through maxima and nulls is determined by the frequency being observed. The variation RF power may derive from equations in Devaux et al (JLT, vol. 11, no. 12, pp. 1937-1940, 1993) as $I=a*\cos(bDf^+2+c)*$, where D is dispersion, f is the RF frequency in question and a, b, c are constants. A preferred arrangement is to use frequencies, f, sqrt(2)*f and 2*f (e.g. 10GHz, 14.14GHz and 20GHz). The variation of these signals with dispersion is given in Figure 9.

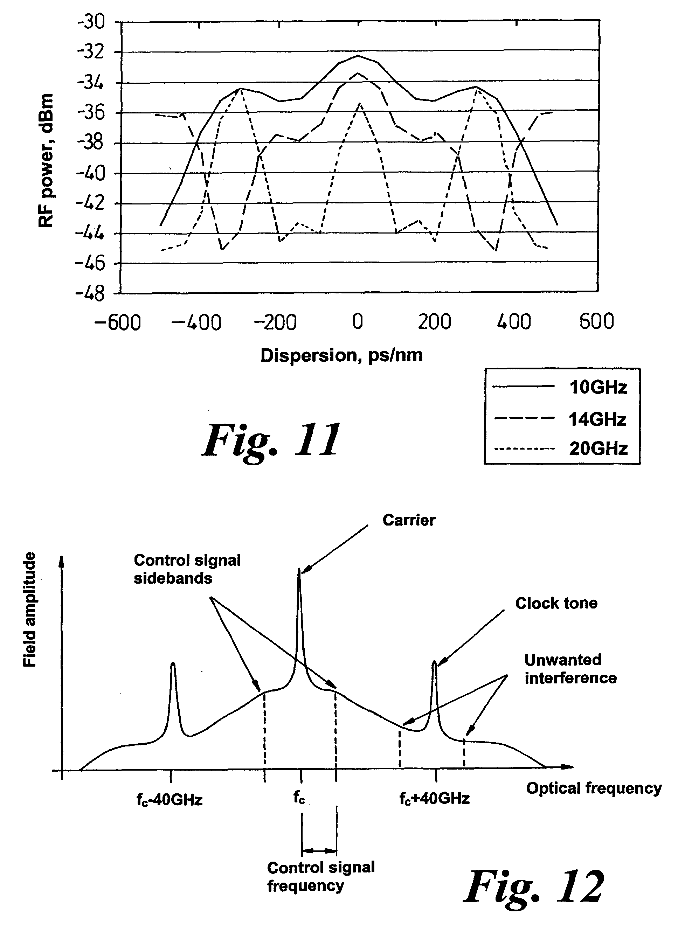

Simulations show that there is a significant departure between the above response and what is obtained when using pseudorandom return to zero data, as may be seen in Figure 11. It has been found that this is due to there being a strong clock tone at the clock frequency, as shown in Figure 12. Here, the tone we wish to observe is either side of the central carrier, fc. However, the strong clock tone is also acting like a carrier and beating with signals either side of it. The phase either side of the clock tone is not symmetrical and hence the cycling of this spurious tone is not predictable. The result is that the composite signal observed is unusable.

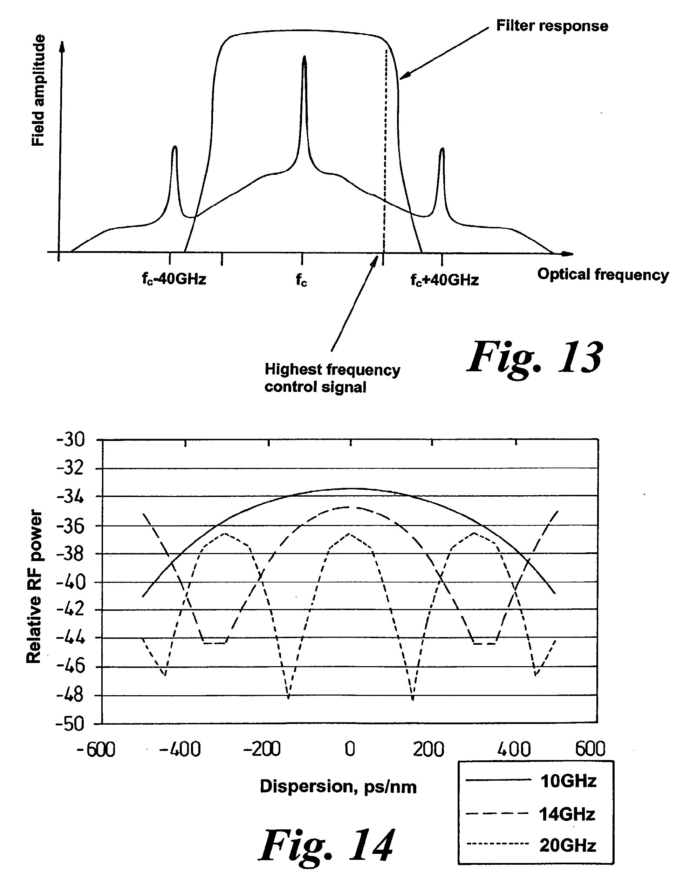

A method of removing the spurious tones (which is employed in preferred embodiments) is to use an optical bandpass filter before detecting the light on the photodiode, as shown in Figure 13. This filter removes the clock tones, leaving just the central carrier and all frequencies up to the highest control frequency used. In the case of a 40Gbit/s system, this filter would ideally be 50GHz wide, allowing the 20GHz control signal to pass through, but providing high rejection to the clock tones 40GHz either side of the carrier. This filter is of a high specification with steep sides and preferably a flat top. It is also important that the filter does not exhibit dispersion (if it has only linear dispersion then this could possibly be equalised out using a length of fibre). Such a filter has been realised experimentally as a Bragg grating in (M. Ibsen, R. Feced, P. Petropoulos, M. N. Zervas. "99.9% Reflectivity dispersion-less square-filter fibre Bragg gratings for high speed DWDM networks". Optical Fibre Communication Conference (OFC) 2000. Baltimore, Maryland, 5-10 March 2000 postdeadline paper PD21).

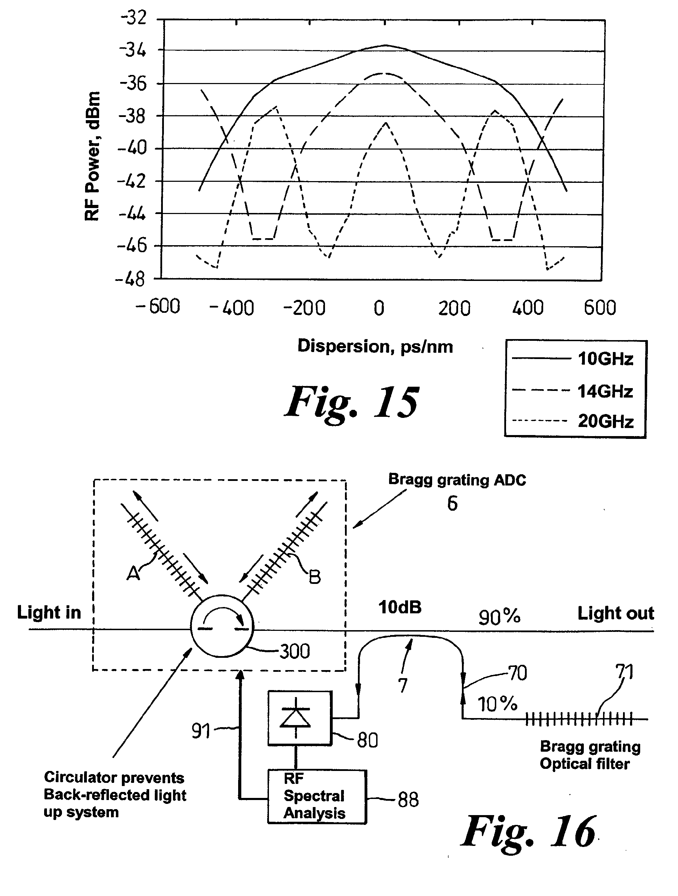

If a perfectly rectangular filter is used, simulations show that the spurious signals are completely eliminated and that they are as predicted, as shown in Figure 14. However, if only a Gaussian filter is available, the control signals will still work, though not quite as well, as shown in Figure 15.

A preferred embodiment uses the configuration of Figure 16. Here the adjustable dispersion compensators is a twin Bragg grating device as disclosed in US 09/385,939. A tap coupler 7 is used after the device 6 with the majority (say 90%) going to the receiver. The remaining 10% is directed onto the other output port which is coupled to a Bragg grating bandpass optical filter 71 operating in reflection. This filter 71 has high reflectivity in the passband and thus 90% of the light tapped off is directed towards the photodiode 80. This particular configuration is advantageous because no expensive additional optical circulator is required and the excess coupling loss to the photodiode is very low. The remaining 10% of the tapped light is directed to the main input port, but his this removed by the optical circulator within the adjustable dispersion compensator.

The generic configuration of Figure 10 can use any type of bandpass filter, for example, a Fabry-Perot, arrayed waveguide, Bragg grating in transmission, Bragg grating in reflection (coupled using a circulator or coupler). Such a grating would require temperature stabilisation (either active temperature control or an athermal package design).

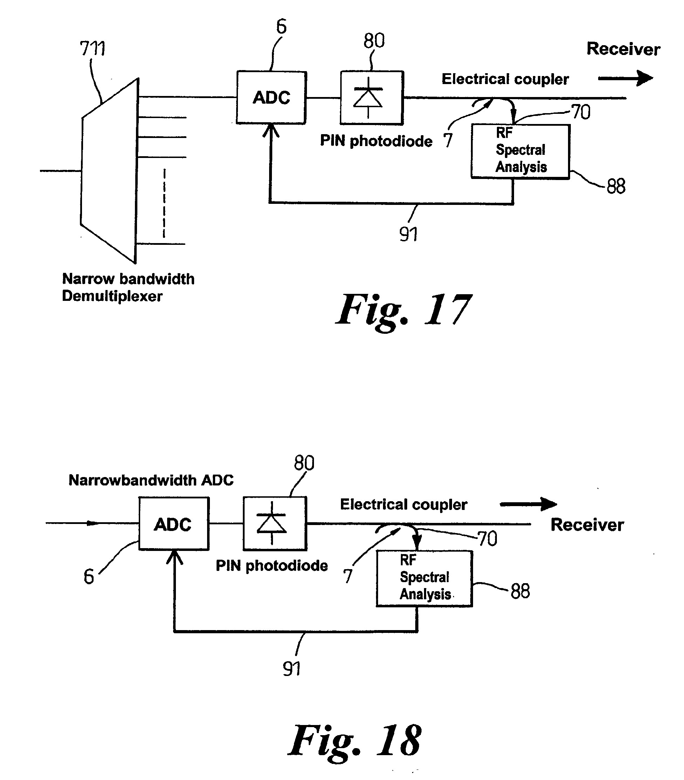

It is possible to perform the filtering function before, after or within the adjustable dispersion compensator, but within the transmission path, such that the light at the receiver is pre-filtered. This is likely to give reduced performance as the received eye will be distorted by the filter, but the cost will also be reduced. One way of achieving this is to perform the filtering in the optical demultiplexer, by making it sufficiently narrow, as shown in Figure 17. Alternatively, the adjustable dispersion compensator itself can be made narrow bandwidth, such that it optically filters the signal, as shown in Figure 18.

Thus, it is desirable that an automatic control loop is used to set the required dispersion of an adjustable dispersion compensator. To do this some form of "dispersion error signal" must be obtained. The RF spectral analysis technique employed in embodiments of the present invention is an element method for doing this as it works on the modulated data signal by interference of the upper and lower sidebands with the carrier. However with certain signals the interference effect is distorted by unwanted contributions from the strong clock tones. Preferred embodiments reply on optically filtering out these clock tones, such that the distortion is removed.

Preferred embodiment of the present invention perform the following steps:

(1) The optical signal is filtered by a narrow bandpass optical filter;
(2) The filtered optical signal is detected on a photodiode;
(3) The RF power is split into one or more paths;
(4) The power in each path is detected on an RF power meter;
(5) The control signals may be combined in a linear combination or treated individually;
(6) Dither may be applied to the Adjustable Dispersion compensator.

This means dither in the dispersion, not necessarily achieved by the dithering mechanisms employing two actuators, acting in combination, as described above. This will result in a dither of the control signal. This dither signal give the gradient of the dispersion error signal. This allows one to deduce the sign of the error signal as well as its magnitude.

For any practical system using an adjustable dispersion compensator it is necessary to determine the dispersion error at the receiver in order to provide a control signal for the adjustable dispersion compensator. Previous methods of achieving this were either not sensitive enough for 40Gbit/s, or required that the data signal be turned off. Systems embodying the present invention allow dynamic tracking of the compensator in real time.

Certain embodiments of the invention use a spectral analysis technique to derive a control signal for an ADC, Background to this technique is a follows:

The spectral analysis technique considers the beating of the upper and lower sidebands of a particular RF frequency with their carrier. The optical power of a sinusoidally modulated carrier may be written as

$$I + I_0 \left(1 + m\cos(2Bf_m t)\right) \tag{1}$$

Where m is the modulation depth (m<<1) and $f_m$ is the RF modulation frequency. The optical spectrum of this signal is a central carrier frequency, $f_c$ with an upper sideband at $f_c + f_m$ and a lower sideband at $f_c - f_m$. The effect of dispersion is to induce a quadratic phase change with frequency across the spectrum. This causes the upper and lower sideband to move in and out of phase with each other and the carrier. When this optical signal is detected on a photodiode, the result is a beating of the two sidebands with the central carrier. At the point where this a **B** phase shift between the sidebands, there will be destructive interference and a null in the RF power. By converting equation (1) into electric field, taking the first three terms of the Fourier series and multiplying by the fibre transfer function, the optical power may be written as [Devaux] (full reference given above):

$$I_f = I_0 m \sqrt{1 + \alpha^2} \left| \cos\left( \frac{\pi\lambda^2 D}{c} f^2 + \arctan(\alpha) \right) \right| \quad (2)$$

where $\forall$ is the chirp parameter, **8** is the free space wavelength, c is the speed of light and D is the net dispersion. [Note in the notation of [Devaux], D refers to dispersion coefficient of the fibre and DL is therefore the equivalent net dispersion]. If the modulation frequency is swept (e.g. on a network analyser, then the detected photocurrent will pass through a set of minima. The frequency of the first minima is found at [Devaux].

$$f_{null.} I = \sqrt{\frac{c}{2D\lambda^2} \left( 3 - \frac{2}{\pi} \arctan(\alpha) \right)} \quad (3)$$

However, in practice it is not desirable to perform a sweep of the RF frequency on the modulator in the transmitter and look for the first null, as this would require that the data signal is taken out of service. It would also prevent active tracking of dispersion changes and require the use of a swept oscillator.

A better way to observe the effect of dispersion, according to embodiments of the present invention, is to observe the actual modulated data spectrum of the signal at the receiver. Here we have a continuous RF spectrum around the carrier, rather than discrete sidebands. However we can consider this spectrum as a superposition of many individual frequency components, each component consisting of the central carrier and a respective upper and lower sideband. In the presence of net dispersion, notches appear in the RF spectrum as a result of the beating of the upper and lower sidebands with the carrier. This effect has been simulated by generating the RF baseband spectrum for different values of net dispersion, and the dispersion includes notches in the spectrum. The frequency of the main dominant notch reduces as the dispersion increases. In principle it is possible to use an RF spectrum analyser (or a dedicated unit consisting of RF mixers to find the frequency of the dominant first null and determine the dispersion. However this would be very costly. Another point is that the curve is very flat at net dispersions beyond 150ps/nm.

The preferred way of analysing the RF signal according to embodiments of the present invention is to use a series of narrow RF bandpass filters and analyse the RF power within these frequency bands. If a Schottky barrier RF detector is used, this gives a voltage which is proportional to the RF power (i.e. proportional to the square of the optical power). Equation (2) may then be re-written as the RF power, $P_{fi}$ at frequency $f_i$ as a function of D.

$$P_{fi}(D) = K\cos^2(ADf_i^2 + B) \quad (4)$$

The detected RF power is therefore periodic with dispersion. The choice of what frequencies to monitor is determined by the dispersion range required. The required tuning range of the DDCM is 600ps/nm. This indicates that the maximum dispersion error must lie between +/-600ps/nm. Use of equation (4), indicates that using the 10GHz frequency component will result in a half-period change in $P_{fi}$ for 600ps/nm change in dispersion. Therefore there will be no ambiguity in the magnitude of dispersion. However, whilst this choice of frequency gives sufficient dynamic range, nature of the sinusoidal response means that there is very little sensitivity at small net dispersion values. It is therefore desirable to use some higher frequency signals as well, as these to give more sensitivity in this region. Given the periodic dependence on fi, the control signals chosen are 10GHz, 14.14GHz (10√2) and 20GHz. The dependence of linear RF power on dispersion, calculated from equation (4) is shown in figure 9. It maybe seen that the nulls of the 14GHz signal coincide with maxima in the 20GHz signal. Using these three control signals, it is always possible to deduce the relative dispersion by looking at the gradient of the signals at this point. The gradient may be found using dither as previously described. Another feature is that at no dispersion do all three signals go below 25% of their maximum value simultaneously.

The effect of using a data modulated RF spectrum instead of a pure tone was examined using the simulated data. The variations in the 10, 14 and 20GHz parts of the spectrum were as expected if a 500MHz RF filter is used at each frequency. There was little resemblance between the simulated control signals and the calculated control signals of figure 9. In particular the 10GHz signal had false minima, which would confuse the control algorithm. As this false minima stretched over a 200ps/nm dispersion range, it would be impossible to avoid it. The control signals are therefore unusable in this form.

The reasons for the large discrepancy between the simulated and ideal control signals was investigated and found to be a result of the strong clock tone at 40GHz either side of the carrier in an RZ system. This effect is illustrated in Figure 12. The clock tone is acting like another carrier signal. Consequently the frequencies either side of this clock tone are beating and down-converting to the baseband frequency. As the dispersion changes, the magnitude of this downconverted signal will cycle through maxima and minima and add to the main control signal. The dispersion also means that the effect of the upper clock frequency is different for the lower clock frequency. Since the downconverted signal is at the control frequency signal, this unwanted effected can not be removed by RF filtering.

A novel way of eliminating the unwanted beating effect on the control signals, employed in preferred embodiments, is to optically filter the signal to remove the clock tones.

## Claims

1. A method of generating a dispersion signal indicative of the dispersion exhibited by an optical path along which an optical signal has been transmitted, the optical signal having been generated by a method comprising the modulation of an optical carrier with an RF data signal having frequency components across an RF data spectrum such that data is carried by the optical signal in upper and lower sidebands on either side of an optical carrier frequency, the method comprising the steps of:

   receiving the optical signal;
   deriving an RF signal having a narrow bandwidth within the RF data spectrum from corresponding optical frequencies in the upper and lower sidebands of the received optical signal;
   detecting the power of the derived RF signal;
   using the detected power as, or to generate, the dispersion signal.

2. A method in accordance with claim 1 comprising the steps of:

   deriving a plurality of said RF signals, each having a respective narrow bandwidth within the RF data spectrum, from respective corresponding optical frequencies in the upper and lower sidebands of the received optical signal;
   detecting a respective power of each derived RF signal; and
   using the detected powers to generate the dispersion signal.

3. A method in accordance with claim 2, wherein said step of deriving a plurality of said RF signals comprises deriving first, second, and third RF signals having bandwidths centred on relative frequencies $f$, $\sqrt{2}\,f$, and $2f$ respectively.

4. A method in accordance with any one of claims 1-3 further comprising the step of optically filtering the received optical signal, before deriving the RF signal, to remove optical frequencies outside the upper and lower sidebands.

5. A method in accordance with claim 4, wherein the optical signal has been generated by a method comprising the modulation of the optical carrier with a clock signal, and the step of optically filtering comprises the removal of optical frequencies arising from said modulation with the clock signal.

6. A method in accordance with any one of claims 1-5, further comprising the step of:

   tapping off a portion of the received signal, and wherein the RF signal is derived from the tapped portion.

7. A method in accordance with any one of claims 1-6, wherein the step of deriving the RF signal comprises:

supplying at least a portion of the received optical signal to a photodiode, and
filtering a signal generated by the photodiode with a narrowband RF filter.

8. A method of compensating for dispersion exhibited by an optical path along which an optical signal has been transmitted, the optical signal having been generated by a method comprising the modulation of an optical carrier with an RF data signal having frequency components across an RF spectrum, such that data is carried by the optical signal in upper and lower sidebands on either side of an optical carrier frequency, the method comprising the steps of:

generating a dispersion signal in accordance with the method of any one of claims 1-7;
supplying at least a portion of the received optical signal to a device exhibiting adjustable dispersion;
using said dispersion signal to control the adjustable dispersion device to exhibit dispersion which at least partially compensates for the dispersion exhibited by said optical path.

9. A method in accordance with claim 8, wherein the received signal is first supplied to the adjustable dispersion device and emerges from said device exhibiting the combined effects of the dispersion exhibited by the optical path and the device, and the step of generating the dispersion signal comprises:

tapping off a portion of the received signal emerging from the adjustable dispersion device, and deriving the RF signal from the tapped portion.

10. A method in accordance with any one of claims 8-9, further comprising the step of dithering the dispersion exhibited by the adjustable dispersion device.

11. A method in accordance with any one of claims 8-10, comprising the step of using the dispersion signal in a feedback arrangement to control the adjustable dispersion device to compensate for changes in the dispersion exhibited by said optical path.

12. A method in accordance with claim 10, comprising the step of using a lock-in amplifier to detect the magnitude of a change in detected RF power at the dither frequency.

13. Apparatus for generating a dispersion signal indicative of the dispersion exhibited by an optical path along which an optical signal has been transmitted, the optical signal having been generated by a method comprising the modulation of an optical carrier with an RF data signal having frequency components across an RF data spectrum, such that data is carried by the optical signal in upper and lower sidebands on either side of an optical carrier frequency, the apparatus comprising:

a photodetector arranged to detect at least a portion of the received optical signal and output a corresponding electrical signal;
at least one narrowband RF filter arranged to filter the electrical signal from the photodetector, the or each filter having a passband within said RF data spectrum;
at least one RF detector, the or each detector being arranged to detect the filtered signal from the or a respective one of said filters and to produce a corresponding power signal indicative of the power of the detected filtered signal.

14. An adjustable dispersion compensator comprising:

a module exhibiting adjustable dispersion and arranged to receive an optical data signal of the type defined in claim 13;
dispersion signal generating apparatus in accordance with claim 13, and
a controller arranged to control said module according to the power signal or signals to adjust the dispersion exhibited by the module to compensate at lest partially for the dispersion of the optical path to the compensator.

*Fig. 1*

*Fig. 2*

EP 1 251 647 A1

*Fig. 3*

EP 1 251 647 A1

*Fig. 4*

*Fig. 5*

**In-Phase Dither**
(To dither centre wavelength)

*Fig. 6*

**Out-of-Phase Dither**
(To dither dispersion)

*Fig. 7*

*Fig. 8*

**Fig. 9**

**Fig. 10**

Fig. 11

| | |
|---|---|
| ——— | **10GHz** |
| — — — | **14GHz** |
| ········· | **20GHz** |

Fig. 12

Filter response

Field amplitude

fc-40GHz    fc    fc+40GHz    Optical frequency

Highest frequency
control signal

*Fig. 13*

Dispersion, ps/nm

Relative RF power

―――― 10GHz

― ― ― 14GHz

.......... 20GHz

*Fig. 14*

**Fig. 15**

| | |
|---|---|
| ——— | **10GHz** |
| – – – | **14GHz** |
| ········ | **20GHz** |

**Fig. 16**

**Fig. 17**

**Fig. 18**

# EUROPEAN SEARCH REPORT

**European Patent Office**

**Application Number**

EP 02 25 1730

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>A | EP 1 073 221 A (LUCENT TECHNOLOGIES INC) 31 January 2001 (2001-01-31)<br><br>* page 3, line 40 – line 57 *<br>* page 6, line 54 – page 7, line 42 *<br>* figures 1,10-12 * | 1,2,4-9, 11,13,14<br>3,10,12 | H04B10/18<br>G02B6/34 |
| A | US 5 430 568 A (FRYMYER DON E  ET AL) 4 July 1995 (1995-07-04)<br>* abstract *<br>* column 11, line 22 – column 12, line 51 *<br>* figure 6 * | 1-14 | |
| D,A | EP 1 081 881 A (NORTEL NETWORKS LTD) 7 March 2001 (2001-03-07)<br>* the whole document * | 1-14 | |
| | | | **TECHNICAL FIELDS SEARCHED (Int.Cl.7)**<br><br>H04B<br>G02B |

The present search report has been drawn up for all claims

| Place of search | Date of completion of the search | Examiner |
|---|---|---|
| THE HAGUE | 30 August 2002 | Reville, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 25 1730

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2002

| Patent document cited in search report | | Publication date | Patent family member(s) | | Publication date |
|---|---|---|---|---|---|
| EP 1073221 | A | 31-01-2001 | US | 6307988 B1 | 23-10-2001 |
| | | | EP | 1073221 A1 | 31-01-2001 |
| | | | JP | 2001077756 A | 23-03-2001 |
| US 5430568 | A | 04-07-1995 | AU | 673223 B2 | 31-10-1996 |
| | | | AU | 5678994 A | 22-06-1994 |
| | | | CN | 1094552 A | 02-11-1994 |
| | | | EP | 0705509 A1 | 10-04-1996 |
| | | | IL | 107826 A | 14-11-1996 |
| | | | JP | 8503827 T | 23-04-1996 |
| | | | WO | 9413076 A1 | 09-06-1994 |
| EP 1081881 | A | 07-03-2001 | US | 6363187 B1 | 26-03-2002 |
| | | | EP | 1081881 A2 | 07-03-2001 |

EPO FORM P0459

For more details about this annex : see Official Journal of the European Patent Office, No. 12/82